**Europäisches Patentamt**

**European Patent Office**

**Office européen des brevets**

(19)

(11) Veröffentlichungsnummer: **0 020 848**
**B1**

(12) **EUROPÄISCHE PATENTSCHRIFT**

(45) Veröffentlichungstag der Patentschrift: **13.07.83**

(21) Anmeldenummer: **80100683.4**

(22) Anmeldetag: **11.02.80**

(51) Int. Cl.³: **G 03 B 17/02, E 05 C 19/06**

(54) Verriegelungsvorrichtung an einer photographischen oder kinematographischen Kamera.

(30) Priorität: **03.04.79 DE 2913361**

(43) Veröffentlichungstag der Anmeldung:
**07.01.81 Patentblatt 81/1**

(45) Bekanntmachung des Hinweises auf die Patenterteilung:
**13.07.83 Patentblatt 83/28**

(84) Benannte Vertragsstaaten:
**AT CH DE FR GB**

(56) Entgegenhaltungen:
**DE - C - 1 015 674**
**DE - U - 7 106 951**
**US - A - 1 691 975**

(73) Patentinhaber: **KODAK AKTIENGESELLSCHAFT**
**Postfach 369**
**D-7000 Stuttgart-Wangen 60 (DE)**

(72) Erfinder: **Böpple, Albert**
**Böblinger Strasse 51**
**D-7000 Stuttgart 1 (DE)**
Erfinder: **Ettischer, Helmut**
**Brühlstrasse 12**
**D-7302 Ostfildern 1 (DE)**

(74) Vertreter: **Lewandowsky, Klaus et al,**
**Kodak Aktiengesellschaft Patentabteilung**
**Postfach 369**
**D-7000 Stuttgart 60 (DE)**

Courier Press, Leamington Spa, England.

Verriegelungsvorrichtung an einer photographischen oder
kinematographischen Kamera

Die Erfindung bezieht sich auf eine Verriegelung für einen Gehäusedeckel einer photographischen oder kinematographischen Kamera mit einem am Kameragehäuse gelagerten und von einem angeformten Federteil in die Schließstellung beaufschlagten Verriegelungsteil.

Durch das DE—GM 71 06 951 ist eine Rückdeckelverriegelung für eine photographische Kamera bekannt geworden, die aus einem am Kamerakörper drehbar gelagerten Verriegelungsteil mit einem angeformten hakenförmigen Riegeltile und einer angeformten Zuhaltefeder besteht. An dem Rückdeckel dieser bekannten Kamera ist ein ebenfalls hakenförmiges Riegelteil angeordnet, das mit dem kamerakörperseitigen Riegelteil in Eingriff steht. Zum Entriegeln des Rückdeckels der bekannten Kamera wird das Verriegelungsteil an seiner geriffelten Fläche mittels eines Fingers gedreht, wobei die hakenförmigen Riegelteile außer Eingriff kommen und der Rückdeckel aufspringt. Bei dieser bekannten Rückdeckelverriegelung kann es vorkommen, daß die Verriegelung in unerwünschter Weise aufspringt, wenn die Kamera einer Schlagbeanspruchung ausgesetzt wird, beispielsweise beim Herunterfallen der Kamera oder beim Anstoßen an einen harten Gegenstand. Um dies zumindest teilweise verhindern zu können, wäre es erforderlich, die Zuhaltekraft der bekannten Verriegelung durch einen entsprechende Ausbildung der Zuhaltefeder zu erhöhen. Damit würde jedoch die Handhabung der Rückdeckelverriegelung in unzumutbarer Weise erschwert werden.

Der Erfindung liegt die Aufgabe zugrunde, eine Verriegelung der gattungsgemäßen Art so auszubilden, daß sie unempfindlich gegen Schlag im Hinblick auf selbsttätiges Öffnen ist, daß sie eine leichtgängige sowie einfache Betätigung ermöglicht und daß sie eine kostengünstige Herstellung erlaubt.

Erfindungsgemäß wird dies dadurch erreicht, daß das Verriegelungsteil als ein kreisförmiges und formschlüssig drehbar gelagertes Bauteil ausgebildet ist, an dem ein etwa halbkreisförmig ausgebildetes, mindestens eine Rastnase tragendes Rastteil koaxial angeordnet ist, daß Endteile des Rastteils biegeelastisch ausgebildet und an dem Verriegelungsteil angeformt sind und daß das Rastteil in bezug auf die Drehachse des Verriegelungsteils radial zum Verriegelungsteil federnd beweglich ist und bei einer Drehbewegung formschlüssig von demselben mitgenommen wird.

In vorteilhafter Weise ist das Rastteil von geringer Masse, so daß dessen Massenbeschleunigung bei einer Schlagbeanspruchung so gering ist, daß es trotz seiner biegeelastischen Ausbildung in seiner Zuhaltestellung verharrt. Die geringe Massenbeschleunigung des Rastteils erfordert nur eine geringe Zuhaltekraft, so daß die Betätigung des Verriegelungsteils in vorteilhafter Weise sehr leichtgängig ist.

Die Zeichnung zeigt jeweils in schematischer Darstellung in der

Fig. 1 eine Teilansicht der Außenseite des Rückdeckels mit der Verriegelungsvorrichtung in der Schließstellung,

Fig. 2 eine Ansicht der Verriegelungsvorrichtung gemäß Fig. 1 in der Offenstellung,

Fig. 3 einen Längsschnitt durch den Rückdeckel und die Verriegelungsvorrichtung in der Offenstellung gemäß Fig. 2,

Fig. 4 eine Teilansicht der Innenseite des Rückdeckels mit der Verriegelungsvorrichtung mit teilweise aufgeschnittenem Deckteil in der Offenstellung der Verriegelungsvorrichtung,

Fig. 5 eine Ansicht gemäß Fig. 4 in der Schließstellung der Verriegelungsvorrichtung,

Fig. 6 einen Längsschnitt durch die Vorrichtung gemäß Fig. 5,

Fig. 7 eine Ansicht gemäß Fig. 4 in der Stellung unmittelbar vor dem Einrasten der Verriegelungsvorrichtung und

Fig. 8 einen Längsschnitt durch die Vorrichtung gemäß Fig. 7.

In der Zeichnung sind nur die zum Verständnis der Vorrichtung notwendigen Bauteile dargestellt. An einem Kamerakörper, von dem lediglich die Wand 1 dargestellt ist, ist ein Rückdeckel 2 um ein nicht dargestelltes Lager schwenkbar angelenkt. Am freien Ende des Rückdeckels 2 ist das Verriegelungsteil 3 angeordnet.

Das Verriegelungsteil 3 ist mit einem Ansatz 3m in einer Ausnehmung 2d des Rückdeckels 2 drehbar gelagert und wird von einem Abdeckteil 4, das zugleich als Kassettenandruckfeder ausgebildet ist, formschlüssig in seiner Lage gehalten, wobei ein Steg 2e und Anschläge 2b und 2c des Rückdeckels 2 als Distanzstücke für das Abdeckteil 4 dienen.

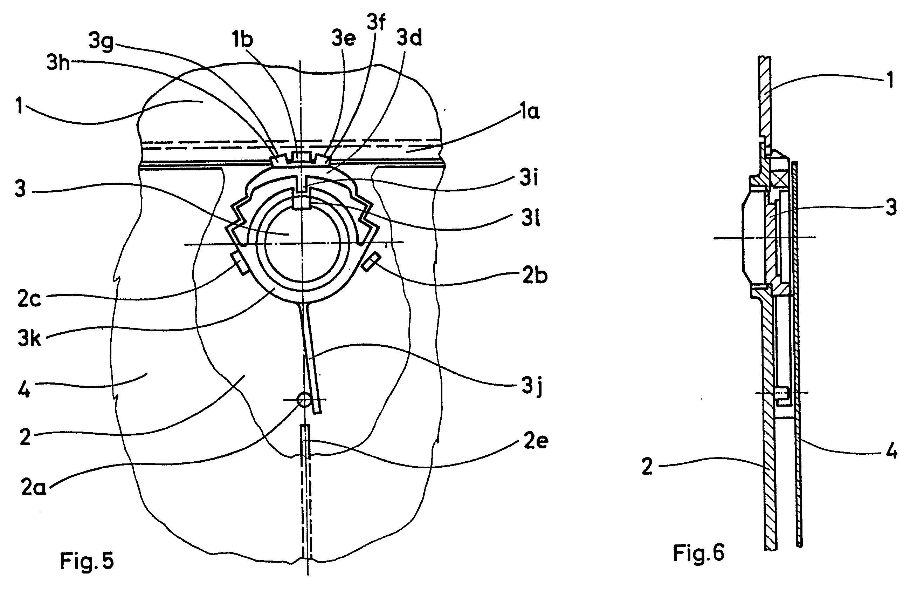

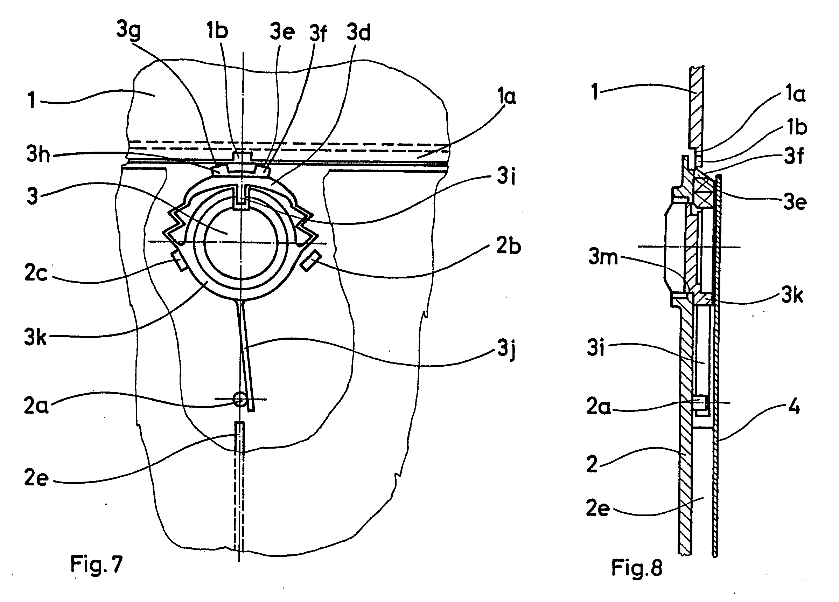

An das Verriegelungsteil 3 sind ein Rastteil 3d, eine Zuhaltefeder 3j und ein Griffsteg 3a angeformt. Die Zuhaltefeder 3j stützt sich an einem Vorsprung 2a des Rückdeckels 2 ab und beaufschlagt das Verriegelungsteil 3 und das Rastteil 3d in die in den Fig. 5 und 7 dargestellte Stellung, in der das Verriegelungsteil 3 an einem Anschlag 2c des Rückdeckels 2 anliegt.

Das Rastteil 3d ist etwa halbkreisförmig ausgebildet und koaxial zu dem im wesentlichen zylindrischen Verriegelungsteil 3 angeordnet. Das Rastteil 3d weist biegeelastische Endteile 3b und 3c von zickzackförmiger Gestalt auf, mit denen es an das Verriegelungsteil 3 angeformt ist.

Das Verriegelungsteil 3 weist einen ringförmigen Ansatz 3k auf, mit dem es an der Innenfläche des Rückdeckels 2 anliegt. An dem Ansatz 3k ist eine Aussparung 31 angeordnet, in die ständig ein Vorsprung 3i des Rastteils 3d eingreift. Aufgrund seiner federelastischen Endteile 3b und 3c kann das Rastteil 3d gegenüber dem Verriegelungsteil 3 zwar eine relative Radialbewegung ausführen, bei einer Drehbewegung des Verriegelungsteils 3 wird das Rastteil 3d jedoch über seinen Vorsprung 3i stets formschlüssig mitgenommen.

An dem Rastteil 3d sind ferner zwei mit Schrägflächen 3f und 3h versehene Rastnasen 3e und 3g angeordnet, die mit einem Steg 1a der Wand 1 des Kamerakörpers zusammenwirken. An dem Steg 1a befindet sich eine Aussparung 1b, durch die die Rastnase 3g des Rastteils 3d hindurchbewegt werden kann.

Ein weiterer Anschlag 2b am Rückdeckel 2 dient zur Bewegungsbegrenzung des Verriegelungsteils 3 und des Rastteils 3d in der Offenstellung, in der die Rastnase 3g des Rastteils 3d und die Aussparung 1b des Steges 1a genau fluchten.

Die Wirkungsweise der Vorrichtung ist folgende:

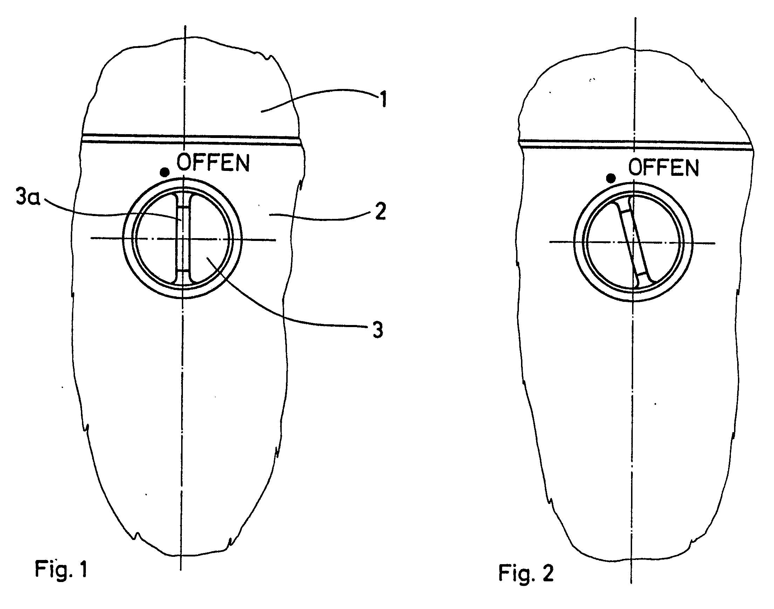

In der Stellung gemäß den Fig. 1, 5 und 6 befindet sich die Vorrichtung in der Schließstellung, in der die Rastnasen 3e und 3g des Rastteils 3 den Steg 1a der Wand 1 hintergreifen.

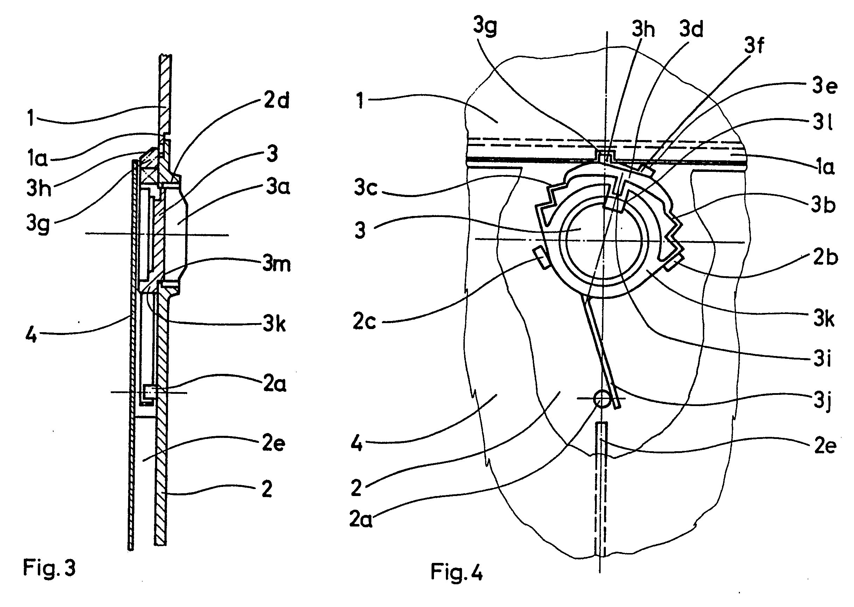

Zum Öffnen des Rückdeckels 2 wird das Verriegelungsteil 3 am Steg 3a erfaßt und im Gegenuhrzeigersinn bis zur Stellung gemäß Fig. 2 verdreht. Dabei nimmt das Verriegelungsteil 3 das Rastteil 3d formschlüssig mit, bis es am Anschlag 2b anliegend die in den Fig. 3 und 4 dargestellte Lage einnimmt.

Wenn der Rückdeckel 2 in seine Offenlage aufgeschwenkt wurde und das Verriegelungsteil 3 losgelassen wird, dann bewegt sich das Verriegelungsteil 3 und das formschlüssig damit verbundene Rastteil 3d unter Wirkung der Zuhaltefeder 3j in die Ausgangsstellung an den Anschlag 2c zurück.

Zum Schließen des Rückdeckels 2 wird dieser lediglich von Hand angeschwenkt und zugedrückt. Dabei stoßen die Rastnasen 3e und 3g gegen den Steg 1a der Wand 1 und über die Schrägflächen 3f und 3h wird das Rastteil 3d radial nach innen bewegt, bis die Rastnasen 3e und 3g unter dem Steg 1a hindurchgleiten und hinter diesem einrasten.

In der Schließstellung der Verriegelungsvorrichtung drückt die Zuhaltefeder 3j das Verriegelungsteil 3 und das formschlüssig damit verbundene Rastteil 3d gegen den Anschlag 2c und stellt damit sicher, daß der Rückdeckel 2 sich nicht selbsttätig öffnen kann.

Das Verriegelungsteil 3, 3d ist in der Schließstellung des Rückdeckels 2 sowohl gegen unbeabsichtigte Betätigung geschützt, da dessen Griffsteg 3a in einer Ausnehmung 2d des Rückdeckels 2 geschützt angeordnet ist, als auch gegen selbsttätiges Öffnen bei einer Schlagbeanspruchung der Kamera, da das Rastteil 3d eine geringe Masse aufweist und dadurch immer in seiner Schließstellung verharrt.

**Patentansprüche**

1. Verriegelung für einen Gehäusedeckel einer photographischen oder kinematographischen Kamera mit einem am Kameragehäuse drehbar gelagerten und von einem angeformten Federteil in die Schließstellung beaufschlagten Verriegelungsteil, dadurch gekennzeichnet, daß das Verriegelungsteil (3) als kreisförmiges und formschlüssig drehbar gelagertes Bauteil ausgebildet ist, an dem ein etwa halbkreisförmig ausgebildetes, mindestens eine Rastnase (3e, 3g) tragendes Rastteil (3d) koaxial angeordnet ist, daß Endteile (3b, 3c) des Rastteils (3d) biegeelastisch ausgebildet und an dem Verriegelungsteil (3) angeformt sind und daß das Rastteil (3d) in bezug auf die Drehachse des Verriegelungsteils (3) radial zum Verriegelungsteil (3) federnd beweglich ist und bei einer Drehbewegung formschlüssig von demselben mitgenommen wird.

2. Verriegelung nach Anspruch 1, dadurch gekennzeichnet, daß an der dem Verriegelungsteil (3) zugewandten Innenfläche des Rastteils (3d) ein Vorsprung (3i) angeordnet ist, der ständig in eine Aussparung (31) des Verriegelungsteils (3) eingreift.

3. Verriegelung nach Anspruch 1 oder 2, dadurch gekennzeichnet, daß an der dem Verriegelungsteil (3) abgewandten Außenfläche des Rastteils (3d) zwei Rastnasen (3e, 3g) ausgebildet sind, die eine Wand (1a) des Kameragehäuses hintergreifen und von denen eine Rastnase (3g) einer Aussparung (1b) der Wand (1a) zugeordnet ist.

4. Verriegelung nach einem der Ansprüche 1 bis 3, dadurch gekennzeichnet, daß das Verriegelungsteil (3) einen Ansatz (3m) aufweist, der in eine Ausnehmung (2d) eines Gehäuse- oder Rückdeckels (2) oder einer starren Wand des Kameragehäuses eingreift, und daß das Verriegelungsteil (3) von einem Abdeckteil (4) formschlüssig in seiner Lage gehalten ist.

5. Verriegelung nach Anspruch 1 bis 4, dadurch gekennzeichnet, daß der Rückdeckel (2) einen Steg (2e) und Anschläge (2b, 2c) aufweist, an denen das Abdeckteil (4) anliegt und daß die Anschläge (2b, 2c) die Drehung des Verriegelungsteils (3) begrenzen.

6. Verriegelung nach einem der Ansprüche 1 bis 5, dadurch gekennzeichnet, daß an das Verriegelungsteil (3) ein Griffsteg (3a) angeformt ist.

7. Verriegelung nach Anspruch 6, dadurch gekennzeichnet, daß der Griffsteg (3a) des Verriegelungsteils (3) innerhalb der Ausnehmung (2d) des Rückdeckels (2) vertieft angeordnet ist.

8. Verriegelung nach einem der Ansprüche 1 bis 7, dadurch gekennzeichnet, daß die Rastnasen (3e, 3g) mit Schrägflächen (3f, 3h) versehen sind.

**Revendications**

1. Verrou pour un couvercle de boîtier d'appareil de prise de vues photographique ou cinématographique muni d'un élément de verrouillage monté mobile en rotation sur le boîtier et sollicité en position de fermeture par une partie élastique qui y fait corps caractérisé en ce que l'élément de verrouillage (3) est façonné en un constituant circulaire et qui est monté tournant desmodromiquement et qui porte un pène (3d) pratiquement demi-circulaire coaxial équipé d'au moins une patte (3e, 3g), en ce que les parties extrémales (3d, 3c) du pène (3d) sont élastiquement flexibles et venues avec l'élément de verrouillage (3) et en ce que le pène (3d) est mobile élastiquement relativement à l'élément de verrouillage (3) radialement par rapport à l'axe de rotation de ce dernier et entraîné desmodromiquement par ce dernier lors d'une rotation.

2. Verrou conforme à la revendication 1 caractérisé en ce que la surface intérieure du pène (3d) en regard de l'élément de verrouillage (3) porte un doigt (3i) qui reste en permanence engagé dans un évidement (3l) de l'élément de verrouillage (3).

3. Verrou conforme à la revendication 1 ou 2 caractérisé en ce que la surface extérieure du pène (3d) qui est à l'opposé de l'élément de verrouillage (3) porte deux pattes (3e, 3g) qui s'engagent derrière une paroi (1a) du boîtier de l'appareil et dont l'une (3g) d'elles coopère avec une échancrure (1b) de la paroi (1a).

4. Verrou conforme à l'une des revendications 1 à 3 caractérisé en ce que l'élément de verrouillage (3) comprend un épaulement (3m) en prise avec un orifice (2d) du couvercle du boîtier ou du dos (2) ou d'une paroi rigide du boîtier de l'appareil et en ce que l'élément de verrouillage (3) est maintenu effectivement en place par une platine de couverture (4) du couvercle.

5. Verrou conforme aux revendications 1 à 4 caractérisé en ce que le dos (2) est muni d'une languette (2e) et de butées (2b, 2c) contre lesquelles repose la platine (4) et en ce que les butées (2b, 2c) limitent la rotation de l'élément de verrouillage (3).

6. Verrou conforme à l'une des revendications 1 à 5 caractérisé en ce que l'élément de verrouillage (3) est muni d'une manette de préhension (3a).

7. Verrou conforme à la revendication 6 caractérisé en ce que la manette de préhension (3a) de l'élément de verrouillage (3) est logé en retrait dans un orifice (2d) du dos (2).

8. Verrou conforme à l'une des revendications 1 à 7 caractérisé en ce que les pattes (3e, 3g) sont munies de biseaux (3f, 3h).

**Claims**

1. Locking mechanism for a housing lid of a photographic or cinematographic camera, said mechanism comprising a locking portion which is rotatably mounted on the camera housing and biased in the closing position by a spring element moulded thereon, characterized in that the locking portion (3) is designed as a circular element which is positively mounted for rotation, and on which an approximately semicircular latch member (3d) with at least one pawl (3e, 3g) is coaxially arranged, in that end portions (3b, 3c) of the latch member (3d) are designed so as to be flexible and moulded on the locking portion (3), and in that the latch member (3d) is resiliently movable radially with respect to the axis of rotation of the locking portion (3) and is taken along by said locking portion during rotation thereof as a result of positive engagement.

2. Locking mechanism according to claim 1, characterized in that on the inner surface of the latch member (3d), which faces the locking portion (3), a projection (3i) is arranged which constantly engages with a recess (3l) in the locking portion (3).

3. Locking mechanism according to claim 1 or 2, characterized in that on the outer surface of the latch member (3d), which faces away from the locking portion (3), two pawls (3e, 3g) are designed which engage behind a wall (1a) of the camera housing, one of said pawls (3g) being associated with a recess (1b) in the wall (1a).

4. Locking mechanism according to claims 1 to 3, characterized in that the locking portion (3) comprises an attachment (3m) engaging with an opening (2d) of a housing or rear lid (2) or with a rigid wall of the camera housing, and in that the locking portion (3) is positively held in its position by a cover portion (4).

5. Locking mechanism according to claims 1 to 4, characterized in that the rear lid (2) comprises a web (2e) as well as stops (2b, 2c) against which the cover portion (4) rests, and in that the stops (2b, 2c) define the path of rotary movement of the locking portion (3).

6. Locking mechanism according to claims 1 to 5, characterized in that a grip ledge (3a) is moulded on the locking portion (3).

7. Locking mechanism according to claim 6, characterized in that the grip ledge (3a) of the locking portion (3) is in a sunken position within the opening (2d) of the rear lid (2).

8. Locking mechanism according to claims 1 to 7, characterized in that the pawls (3e, 3g) have inclined surfaces (3f, 3h).

OFFEN

Fig. 2

1

2

3

OFFEN

3a

Fig. 1

0 020 848

Fig. 3

Fig. 4

Fig.5

Fig.6

0020848

Fig. 7

Fig. 8

0 020 848